**Europäisches Patentamt**

**European Patent Office**

**Office européen des brevets**

(19)

(11) Veröffentlichungsnummer: **0 103 251**
A2

## (12) EUROPÄISCHE PATENTANMELDUNG

(21) Anmeldenummer: **83108749.9**

(22) Anmeldetag: **06.09.83**

(51) Int. Cl.³: **C 08 G 63/18**, C 08 G 63/20, C 09 D 3/66, C 08 L 67/02, C 08 L 67/08

(30) Priorität: **10.09.82 DE 3233566**
**30.07.83 DE 3327643**

(43) Veröffentlichungstag der Anmeldung: **21.03.84**
**Patentblatt 84/12**

(84) Benannte Vertragsstaaten: **AT BE CH DE FR GB IT LI NL SE**

(71) Anmelder: **HOECHST AKTIENGESELLSCHAFT, Postfach 80 03 20, D-6230 Frankfurt am Main 80 (DE)**

(72) Erfinder: **Fischer, Hannes, Dr., Bachstrasse 22, D-6204 Taunusstein (DE)**

(54) **Bindemittel für Einbrennlacke.**

(57) Bindemittel für Einbrennlacke, die als wesentliche Komponenten Aminharze, insbesondere Melaminharze, und Polyesterharze mit Einheiten von I) Butandiol-1,4 und Terephthalsäure in praktisch äquivalenten Mengen enthalten, wobei die Summe der Anteile an Butandiol-1,4 und Terephthalsäure 8 bis 60 Gew.-%, bezogen auf den Gesamtansatz, beträgt, und die daneben II) Einheiten anderer drei- bis vierwertiger Alkohole und III) anderer Dicarbonsäuren enthalten, wobei der Anteil der mindestens dreiwertigen Alkohole 20 bis 55 Äquivalentprozent und der der mehr als dreiwertigen Alkohole höchstens 10 Äquivalentprozent, jeweils berechnet auf die Gesamtmenge der Hydroxylgruppen und der Anteil der aromatischen Dicarbonsäuren mindestens 50 Mol% beträgt.

Die Erfindung besteht weiter in der Verwendung solcher Bindemittel zur Herstellung von Einbrennbeschichtungen mit guter Haftung und Steinschlagfestigkeit.

- 1 -

HOECHST AKTIENGESELLSCHAFT HOE 83/F 151 J     Dr.Klr/St

Bindemittel für Einbrennlacke

Für Einbrennlacke, an die hinsichtlich Härte und Flexibilität hohe Anforderungen gestellt werden, sind ölfreie Polyesterharze, d.h. Alkydharze, die keine oder nur sehr geringe Anteile an Fettsäure enthalten, in Kombination mit Aminharzen, vorzugsweise Melaminharzen, ein bevorzugter Bindemitteltyp.

Für den Einsatz in der Automobilindustrie, in der an Beschichtungsstoffe hinsichtlich Haftung, sowohl auf metallischem Untergrund als auch gegenüber anderen Lackschichten, Elastizität und Steinschlagfestigkeit besonders hohe Anforderungen gestellt werden, reichen die Eigenschaften der Lacke auf Basis bekannter ölfreier Polyesterharze nicht aus.

In der DE-AS 18 07 776 sind Überzugsmittel beschrieben, die lineare Polyesterharze, die weitgehend frei von Hydroxylgruppen sind, in Kombination mit Benzoguanaminharzen als Bindemittel enthalten. Die daraus hergestellten Beschichtungen sind zwar sehr elastisch, aber nicht wetterfest und daher nicht für die Außenanwendung geeignet.

Weiterhin sind aus der DE-AS 20 12 525 Überzugsmittel bekannt, in denen ölfreie Polyesterharze eingesetzt werden, die als Diolkomponente im wesentlichen Butandiol-1,3 enthalten. Die aus diesen Lacken hergestellten Beschichtungen sollen sich durch hohe Härte und Elastizität auszeichnen.

In der FR-PS 1 574 618 werden Aminoplaste und lineare
Polyester enthaltende Überzugsmittel beansprucht, wobei
die Diolkomponente der Polyesterharze zu mindestens 70
Mol-% aus 1,4-Bis-(Hydroxymethyl)-cyclohexan besteht. Diese Überzugsmittel liefern harte und elastische Überzüge.

Aus der DE-AS 14 45 311 ist ferner bekannt, ungesättigte
Polyesterharze dadurch herzustellen, daß lineare Polykondensate aus Diolen und Terephthalsäure mit mehrwertigen
Alkoholen oder Dicarbonsäuren umgeestert und anschließend
zu dem gewünschten Endprodukt weiterverestert werden.

Keine der genannten Druckschriften enthält jedoch einen
Hinweis darauf, daß Produkte mit besonders guter Haftung
und/oder Steinschlagfestigkeit erhalten werden.

Die EP-OS 8344 beschreibt flüssige Überzugsmittel auf der Basis
von Aminoplasten und linearen Polyestern, deren Alkoholkomponente
ausschließlich aus bestimmten Diolen besteht, nämlich einem Gemisch von 5 bis 30 Mol-% Butandiol-1,3 oder -1,4 und 95 bis 70 Mol-%
Neopentylglykol, das bis zu 60 Mol-% - bezogen auf Neopentylglykol
entsprechend 100 Mol-% - durch Propandiol-1,2 ersetzt sein kann.
Die Diolkomponente kann noch zusätzlich bis zu 30 Mol-% an
weiteren Diolen mit primären und/oder sekundären Hydroxylgruppen
enthalten, die durch eine Kette von mindestens 3 C-Atomen getrennt sind, sich aber grundsätzlich vom Butandiol-1,4 unterscheiden sollen. Dreiwertige Alkohole sind in diesem System
also nicht enthalten. Die Bindemittel sollen eine ausgezeichnete
Haftung, insbesondere auf Metallen haben.

Aus der DE-AS 27 21 989 sind schließlich flüssige Überzugsmittel
bekannt, die als Bindemittel Aminoplaste und mindestens bifunktionelle, überwiegend freie Hydroxylgruppen tragende Polyester
enthalten. Diese Polyester sollen als Alkoholkomponente 100 bis
50 Mol-% eines Gemisches von Äthylenglykol und Propandiol-1,2 im Molverhältnis 9:1 bis 1:9, 0 bis 40 Mol-% aliphatische oder cycloaliphatische Diole und 0 bis 50 Mol-% aliphatische Polyole mit 3 oder 4 Hydroxylgruppen und 3 bis 6 Kohlenstoffatomen enthalten. Die Säurekomponente muß aus 67 bis 92 Mol-% Hexahydroterephthalsäure und 8 bis 33 Mol-% Terephthalsäure bestehen. Derartige Bindemittel sollen u.a. zur Herstellung von Autodecklacken eingesetzt werden können und eine gute Haftung, "insbesondere auf Metallen" haben. Dies beinhaltet keine Aussage über die Haftung auf Kunststoffen oder Lacken und insbesondere keine Angabe über die Steinschlagfestigkeit.

Als herausragende Eigenschaft wird die Möglichkeit angegeben, selbst dann hartelastische Überzüge zu erhalten, wenn die Einbrenntemperatur über einen weiten Bereich variiert wird.

Es wurde jetzt gefunden, daß ölfreie Polyesterharze, die Terephthalsäure und Butandiol-1,4 in bestimmten Gewichtsmengen neben bestimmten Mengen von mindestens dreiwertigen Alkoholen und eine bestimmte Gesamtmenge an aromatischen Säuren enthalten, in Kombination mit Aminharzen, vorzugsweise den in der Lackindustrie üblichen Melaminharzen, Beschichtungen mit wesentlich besserer Haftung der einzelnen Lackschichten aufeinander und deutlich höherer Steinschlagfestigkeit als die bisher bekannten Produkte ergeben.

Gegenstand der vorliegenden Erfindung sind daher Bindemittel für Einbrennlacke, die als wesentliche Komponenten Aminharze und Polyesterharze mit Einheiten von I) Butandiol-1,4 und Terephthalsäure und daneben II) Einheiten anderer drei- bis vier-wertiger Alkohole und III) anderer Dicarbonsäuren enthalten, dadurch gekennzeichnet, daß die Butandiol-1,4-und Terephthalsäure-Einheiten in praktisch äquivalenten Mengen vorhanden sind und die Summe der Anteile an Butandiol-1,4 und Terephthalsäure 8 bis 60 vorzugsweise 10 bis 40, insbesondere 12 - 25 Gew.-% (Summe von Butandiol-1,4 und Terephthalsäure, berechnet auf Gesamtansatz) beträgt, daß der Anteil der mindestens dreiwertigen Alkohole höchstens

- 4 -

55, aber mindestens 20 Äquivalent-% und der der mehr als dreiwertigen Alkohole höchstens 10 Äquivalent-%, jeweils berechnet auf die Gesamtmenge der Hydroxylgruppen, und der Anteil der aromatischen Dicarbonsäuren mindestens 50 Mol-% beträgt. Der bevorzugte Anteil der dreiwertigen Alkoholkomponente beträgt mindestens 30 und insbesondere mindestens etwa 35 Äquivalent-% und die Höchstmenge vorzugsweise 45, insbesondere 40 Äquivalent-%, jeweils berechnet auf die Gesamtmenge der Hydroxylgruppen, während die Menge der aromatischen Carbonsäuren bevorzugt mindestens 55, insbesondere mindestens etwa 60 Mol-% beträgt und z.B. 90, vorzugsweise 80 und insbesondere 70 Mol-% nicht übersteigt.

In einer speziellen, wirtschaftlich besonders günstigen Ausführungsform zur Herstellung geeigneter Polyester können Butandiol-1,4 und Terephthalsäure nicht als solche, sondern in Form eines aus Butandiol-1,4 und Terephthalsäure hergestellten langkettigen Polyesters eingesetzt werden.

Die erfindungsgemäß verwendeten Polyesterharze geben in Kombination mit Aminharzen, vorzugsweise Melaminharzen, Einbrennlacke, die die bekannt guten Eigenschaften von Lackfilmen auf Basis ölfreier Polyester haben, sich aber zusätzlich durch überraschend gute Haftung gegenüber darunter- und/oder darüber liegenden Lackschichten und besonders gute Resistenz im Steinschlagtest auszeichnen. Ein weiterer Vorteil der Beschichtungen ist die gute Wetterfestigkeit.

Als mehrwertige Alkohole kommen bei der Herstellung der erfindungsgemäßen Produkte zweiwertige Alkohole wie Äthylenglykol, Propandiol-1,2, Propandiol-1,3, Neopentylglykol, Butandiol-1,3, Pentandiol-1,5, Cyclohexandiol-1,2, Hexandiol-1,6, Dimethylolcyclohexan in den verschiedenen isomeren Formen, 2-Äthylhexandiol-1,3, Diäthylenglykol, Triäthylenglykol, Dipropylenglykol oder Tripropylenglykol in Frage, wobei mit Ausnahme von Butandiol-1,4 von Diolen mit mehr als drei Kohlenstoffatomen zwischen den beiden Hydroxylgruppen, beispielsweise Hexandiol-1,6, nur untergeordnete Mengen, z.B. bis zu 10, vorzugsweise nur bis 5 Äquivalent-% eingesetzt werden sollten. Als dreiwertige Alkohole sind beispielsweise Glycerin, Trimethyloläthan und -propan oder die verschiedenen Hexantriole geeignet.

Trimethylolpropan ist bevorzugt. Die Mitverarbeitung sehr kleiner Mengen vierwertiger Alkohole wie Pentaerythrit in Mengen von nicht mehr als 10, vorzugsweise nicht mehr als 5 Äquivalent-%, berechnet auf die Gesamtmenge der vorhandenen Hydroxylgruppen, ist möglich.

Als Dicarbonsäuren können beispielsweise ortho-Phthalsäure oder deren Anhydrid, Isophthalsäure, Tetra- oder Hexahydrophthalsäure, sowie Substitutionsprodukte dieser Säuren, Bernsteinsäure, Glutarsäure, Adipinsäure, Korksäure, Sebacinsäure, Acelainsäure, Dekandicarbonsäure, Maleinsäure oder deren Anhydrid, Fumarsäure und gegebenenfalls in untergeordneten Mengen, z.B. unter 5, vorzugsweise nicht mehr als 2 Gew.-% des Gesamtgemisches dimerisierte Fettsäuren eingesetzt werden. Der Ersatz von freien Carboxylgruppen durch Alkylestergruppen mit kurzen Alkylketten (1 bis 4 C-Atomen) ist möglich; z.B. können anstelle der Dicarbonsäuren Dicarbonsäurehalbester verwendet werden.

Sofern eine Modifizierung durch Fettsäuren, insbesondere die in Alkydharzen üblichen, erfolgen soll, beträgt deren Anteil zweckmäßig nicht mehr als 4, vorzugsweise nicht mehr als 2 Gew.-%.

Das Verhältnis von Hydroxyl- zu Carboxylgruppen wird so gewählt, daß bei der für den praktischen Einsatz erforderlichen Viskosität der Endprodukte (beispielsweise 150 bis 250 mPa.s/50 %ig, gemessen in Äthylglykolacetat, d.i. dem Essigsäureester des Monoäthyläthers von Äthylenglykol) ein ausreichend hoher Hydroxylüberschuß erhalten bleibt, um Vernetzungsmöglichkeiten mit dem Aminharz zu schaffen, und eine Säurezahl von ca. 5 bis 20 erhalten bleibt, um die spätere Vernetzungsreaktion zu beschleunigen. In der praktischen Durchführung der Erfindung beträgt das Äquivalentverhältnis von Hydroxyl- zu Carboxyl-Gruppen im allgemeinen zwischen etwa 1,1 und 1,5, vorzugsweise zwischen 1,2 und 1,4.

Die erfindungsgemäß verwendeten Polyester werden z.B. durch Veresterung mehrwertiger Alkohole und Dicarbonsäuren unter Abtrennung des gebildeten Wassers durch azeotrope Destillation mit einem Schleppmittel wie Xylol hergestellt. Falls nicht von Butandiol-1,4 und Terephthalsäure, sondern dem aus diesen Komponenten hergestellten Polyester ausgegangen wird, wird zunächst dieser Polyester durch Umesterung mit mehrwertigen Alkoholen zu oligomeren und monomeren Estern, z.B. Terephthalsäure-bis-diolmonoester abgebaut. Bei der Durchführung dieser Reaktion ist es zweckmäßig, einen der literaturbekannten Umesterungskatalysatoren, beispielsweise Bleioxid, Lithiumhydroxid oder Zinnverbindungen wie Dibutylzinnoxid mitzuverwenden, da auf diese Weise die Bildung von Tetrahydrofuran als Nebenprodukt zurückgedrängt wird.

Gegenstand der Erfindung ist auch die Verwendung der erfindungsgemäßen Bindemittel zur Herstellung von Einbrennbeschichtungen mit guter Haftung und Steinschlagfestigkeit.

Als Aminharze kommen z.B. Harnstoff- und Benzoguanaminharze in Frage, vorzugsweise aber zur Erzielung einer guten Wetterbeständigkeit Melaminharze, vor allem die Methylolverbindungen, z.B. des Melamins mit etwa 3 bis 6 Hydroxymethylgruppen je Melaminmolekül, die wenigstens teilweise mit kurzkettigen einwertigen Alkoholen, z.B. solchen mit 1 bis 4 C-Atomen, insbesondere Methanol oder Butanolen, veräthert sind.

Das Gewichtsverhältnis zwischen den Polyesterharzen und Aminharzen beträgt üblicherweise 9:1 bis 1:1, vorzugsweise 9:1 bis 2:1, berechnet auf lösungsmittelfreie Harzkomponenten. Zur Beschleunigung der Härtungsreaktion können wahlweise Katalysatoren, wie p-Toluolsulfonsäure, in geringen Mengen, beispielsweise 1 %, berechnet auf die Gesamtmenge der Harze, zugesetzt werden.

Für spezielle Anwendungsgebiete ist auch die Mischung mit zusätzlichen anderen Kunstharzen, beispielsweise Celluloseacetobutyrat bis maximal 100 Gew.-%, oder Epoxidharzen in Mengen bis 40 Gew.-%, z.B. von 10 bis 35 Gew.-%, jeweils berechnet auf lösungsmittelfreies Polyesterharz, möglich.

Die beschriebenen Mischungen können in Einbrennlacken verarbeitet werden, die als Grundierungen, Grundlacke für Metallic-Zweischichtlackierungen oder Decklacke eingesetzt werden. Sie haben gegenüber Lacken auf Basis ölfreier Polyesterharze, die dem bisher bekannten Stand der Technik entsprechen, bei gleicher Härte eine höhere Elastizität, verbesserte Haftung der Lackschichten auf Metall und untereinander und eine starke verbesserte Steinschlagfestigkeit. Durch diese wertvollen Eigenschaften sind die erfindungsgemäßen Polyester vor allem für die Automobillackierung sehr geeignet.

In den folgenden Beispielen wurde, sofern nicht anders angegeben, die Viskosität in 50 %iger Lösung in Äthylglykolacetat nach DIN 53 177 und die Säurezahl nach DIN 53 402 gemessen.

Beispiele

I) Herstellung der Harze (Beispiele 1 bis 5)

1) 170 g Trimethylolpropan, 226 g Neopentylglykol, 68,5 g Butandiol-1,4, 126,5 g Terephthalsäure und 0,5 g Dibutylzinnoxid wurden unter Abdestillation des gebildeten Wassers über eine Fraktionierkolonne auf 180 bis 200°C erhitzt, bis eine blanke Schmelze entstand. Nach Zugabe von 260 g Phthalsäureanhydrid, 220 g Adipinsäure und 50 ml Xylol wurde bei 190 bis 210°C im Kreislauf destilliert, wobei das entstandene Wasser abgezogen wurde, bis eine Viskosität von 190 mPa.s (1:1 in Äthylglykol (= Äthylenglykolmonoäthyläther), gemessen nach DIN 53 177) erreicht war. Das fertige Produkt wurde in Äthylglykolacetat gelöst. Viskosität 210 mPa.s, Säurezahl 6.

2) Nach dem in Beispiel 1 beschriebenen Verfahren wurden 168 g Trimethylolpropan, 200 g Neopentylglykol, 25 g Pentandiol-1,5, 68,5 Butandiol-1,4, 126,5 g Terephthalsäure, 260 g Phthalsäureanhydrid und 220 g Adipinsäure unter Zusatz von 0,5 g Dibutylzinnoxid zu einem Polyesterharz umgesetzt. Viskosität 190 mPa.s; Säurezahl 5.

3) 169 g Polybutylenterephthalat, 280 g Neopentylglykol, 170 g Trimethylolpropan und 0,5 g Dibutylzinnoxid wurden vier Stunden auf 200 bis 210°C erhitzt. Nach Zugabe von 245 g Phthalsäureanhydrid, 225 g Adipinsäure und 50 ml Xylol wurde unter Abtrennung des entstehenden Wassers bei Steigerung der Temperatur um 10°C/Stunde von 160 bis 210°C destilliert, bis die im Beispiel 1 genannte Viskosität in Äthylglykol erreicht war. Viskosität 175 mPa.s; Säurezahl 7.

4) 169 g Polybutylenterephthalat, 280 g Neopentylglykol, 152 g Trimethyloläthan, 245 g Phthalsäureanhydrid und 225 g Adipinsäure wurden unter Zusatz von 0,5 g Dibutylzinnoxid nach dem in Beispiel 3 beschriebenen Verfahren zu einem Polyester umgesetzt. Viskosität 180 mPa.s; Säurezahl 10.

5) 169 g Polybutylenterephthalat, 260 g Neopentylglykol, 20 g Hexandiol-1,6, 170 g Trimethylolpropan, 245 g Phthalsäureanhydrid und 225 g Adipinsäure wurden nach Zusatz von 0,6 g Dibutylzinnoxid nach dem in Beispiel 3 beschriebenen Verfahren zu einem Polyester umgesetzt. Viskosität 170 mPa.s; Säurezahl 5.

II) Verwendung (Beispiele 6 - 10)

In den folgenden Tabellen ist das Ergebnis anwendungstechnischer Prüfungen von weißen Decklacken unter verschiedenen Einbrennbedingungen (Beispiele 6 und 7), von Automobilfüllern (Beispiele 8 und 9) und von Automobillackierungen (Beispiel 10) beschrieben. Für die Prüfung der Steinschlagfestigkeit wurde ein interner Standard (1= bester Wert, 10= schlechtester Wert) angewandt.

Der in den Vergleichen verwendete Polyester war ein ölfreies Produkt ohne Anteile von Terephthalsäure und Butandiol-1,4 mit einer Säurezahl von 4 bis 7 im Festharz und einer Viskosität (70 %ig in Xylol) von 3200 mPa.s/20°C. Das Melaminharz der Beispiele 6, 7 und des Vergleichs 1 lag in 55 %iger Lösung in Isobutanol-Xylol mit der Viskosität in Lieferform von 380 bis 500 mPa.s/20°C vor. Das Produkt war mit Isobutanol schwach veräthert. Als Epoxydharz wurde in den Beispielen 8, 9 und Vergleich 2 eine 75 %ige Lösung eines Epoxydharzes verwendet, das in 100 %iger Form ein Epoxyd-Äquivalentgewicht von 450 bis 525 hatte. Das in den gleichen Beispielen verwendete Melaminharz war ein teilweise mit Methanol veräthertes Produkt, das 75 %ig in Isobutanol vorlag und eine Viskosität von etwa 7000 mPa.s hatte. Das Lösungsmittelgemisch dieser Beispiele bestand aus Isobutanol, Benzylalkohol, Äthylglykolacetat und den Solvesso-Typen 100 und 150 (11:0,3:30:22,5:31,5). Das Carbaminsäureesterharz

- 10 -

des Beispiels 10 und Vergleichs 3 wurde durch Kondensation mit Formaldehyd erhalten und in 100 %iger Form verwendet. Die Viskosität betrug 6000 bis 20 000 mPa.s/20°C.

Weiße Decklacke (Beispiele 6 und 7)

a) Zusammensetzung (Mengen in g)

| Beispiel | 6 | 7 | Vergleich 1 |
|---|---|---|---|
| Polyester nach Beispiel I,1 (70 %ig) | 40 | – | – |
| Polyester nach Beispiel I,3 (70 %ig) | – | 40 | – |
| Handelsüblicher Polyester (70 %ig) | – | – | 40 |
| Melaminharz | 21,8 | wie Beispiel 6 | wie Feispiel 6 |
| Titandioxid [R] (Kronos CL 310) | 28 | | |
| Xylol-Äthylglykolacetat (1:1) | 7,9 | | |
| Bentonit-Paste, 10 %ig | 2 | | |
| Silikon-Additiv [R] (Additol VXL 122) | 0,3 | | |

b) Eigenschaften nach Einbrennen auf Glasplatten während 30 Minuten bei 140°C

| | | | |
|---|---|---|---|
| Pendelhärte (DIN 53157); s | 148 | 150 | 130 |
| Glanz/60° (DIN 67530); % | 92 | 92 | 91 |

c) Eigenschaften nach Einbrennen auf Stahlblech während 30 Minuten bei 150°C

| | | | |
|---|---|---|---|
| Gitterschnitt (DIN 53151) | 0-1 | 0-1 | 0-1 |
| Erichsen-Tiefung (DIN 53156); mm | 7,7 | 7,5 | 5 |
| Schlagtiefung (inch x pds) | 13 | ·12 | 4 |
| Glanz/60° nach 1500 Stunden (Xenontest 1200) % | 50 | 50 | 50 |

d) Eigenschaften nach Einbrennen auf grundiertem Blech während 15 Minuten bei 170°C

| | | | |
|---|---|---|---|
| Steinschlagfestigkeit | 2 | 2 | 4 |

## Automobilfüller (Beispiele 8 und 9)

a) Zusammensetzung (Mengen in g)

| Beispiel | 8 | 9 | Vergleich 2 |
|---|---|---|---|
| Polyester nach Beispiel I,5 (70%ig) | 85,7 | – | – |
| Polyester nach Beispiel I,3 (70%ig) | – | 85,7 | – |
| Polyester wie in Beispiel 6, jedoch 60 %ig | – | – | 100 |
| Titandioxid (Kronos RN 59) | 48,8 | | |
| Blanc fixe micro | 48,8 | | |
| Ruß ((R)Printex 300) | 0,4 | | |
| Hochdisperse Kieselsäure (R)Aerosil R 972 u. Aerosil 200 3:1 | 2,0 | | |
| Verlaufmittel Additol XL 480 | 0,6 | | |
| Epoxidharz[1] (75 %ig in Xylol) | 26,7 | | |
| Melaminharz | 26,7 | | |
| Lösungsmittelgemisch | 54,8 | | |

[1] auf Basis von Diphenylolpropan, Epoxidäquivalentgewicht 450-525

b) Eigenschaften nach Einbrennen während 15 Minuten bei 170°C

| | | | |
|---|---|---|---|
| Gitterschnitt | 0 | 0 | 0 |
| Erichsen-Tiefung; mm | 10,2 | 10,0 | 9,6 |
| Glanz/60°, % | 90 | 88 | 91 |
| Steinschlagfestigkeit | 2 | 2 | 4 |

Der im folgenden Beispiel 10 erwähnte Decklack wurde aus einer Kombination von zwei Hydroxylgruppen enthaltenden hitzehärtbaren Acrylharzen im Verhältnis 1:1, bezogen auf Festharz, und einem Melaminharz hergestellt (Verhältnis Acrylharz:Melaminharz, 70:30, bezogen auf Festharz). Die OH-Zahlen der Acrylharze betrugen 120 und 80, jeweils auf Festharz bezogen. Das eine Harz wurde in 75 %iger Lösung in aromatischen Kohlenwasserstoffen vom Siedebereich 156 - 178°C ((R)Solvesso 100) angewandt (Viskosität 60 %ig in Solvesso 100 200 bis 300 mPa.s). Das andere Acrylharz wurde in 65 %iger Lösung in Xylol/Butanol 3:1 eingesetzt. Die Viskosität (auf 50 % mit Xylol verdünnt) lag im Bereich von 850 bis 1450 mPa.s. Das Melaminharz war ein mit Isobutanol veräthertes Melaminharz hoher Reaktivität; es lag in 55 %iger isobutanolischer Lösung vor. Die Viskosität der Lieferform betrug 380 mPa.s.

## Vollständige Automobillackierungen (Beispiel 10)

a) Zusammensetzung der Lackierungen Grundierung: Handelsübliche Kataphorese-Grundierung Füller: Wie in Vergleich 2 angegeben.

| Metallic-Grundlacke (Mengen in g) | 10 | Vergleich 3 |
|---|---|---|
| Polyester nach Beispiel I,3 (70%ig) | 14,6 | - |
| Polyester (wie in Vergleich 1, 70%ig) | - | 14,6 |
| Aluminiumpigment ((R)Stapa Mobil R 807) | 1,0 | |
| Aluminiumpigment (Stapa Mobilux R 157) | 5,5 | |
| Lecithin Konz. | 0,1 | |
| hochdisperse Kieselsäure (Aerosil 200) | 1,0 | |
| Carbaminsäureesterharz | 2,5 | |
| Celluloseacetobutyrat (381,01/18%ig) | 54,2 | |
| Melaminharz (wie in Beispiel 6, jedoch 55%ig | 4,6 | |
| Silikon-Verlaufsmittel (R)Baysilon OL/10%ig) | 1,0 | wie in Beispiel 10 |
| Xylol | 9,0 | |
| Äthylenglykolmonobutyläther | 3,5 | |
| Dekahydronaphthalin | 1,5 | |
| Butylacetat | 1,5 | |

Decklack wie zuvor angegeben:

b) Einbrennbedingungen:

Grundierung: 20 Minuten bei 180°C

Füller: 15 Minuten bei 170°C

Grundlack: Luftgetrocknet

Decklack: 30 Minuten bei 140°C

c) Steinschlagfestigkeit      1      4-5

1) Bindemittel für Einbrennlacke, die als wesentliche Komponenten Aminharze, insbesondere Melaminharze, und Polyesterharze mit Einheiten von I) Butandiol-1,4 und Terephthalsäure enthalten und die daneben II) Einheiten anderer drei- bis vierwertiger Alkohole und III) anderer Dicarbonsäuren enthalten, dadurch gekennzeichnet, daß die Butandiol-1,4-und Terphthalsäure-Einheiten in praktisch äquivalenten Mengen vorhanden sind und die Summe der Anteile an Butandiol-1,4 und Terephthalsäure 8 bis 60 Gew.-%, bezogen auf den Gesamtansatz, beträgt, der Anteil der mindestens dreiwertigen Alkohole höchstens 55, aber mindestens 20 Äquivalentprozent und der der mehr als dreiwertigen Alkohole höchstens 10 Äquivalentprozent, jeweils berechnet auf die Gesamtmenge der Hydroxylgruppen, und der Anteil der aromatischen Dicarbonsäuren mindestens 50 Mol-% beträgt.

2) Verwendung der Bindemittel nach Anspruch 1 zur Herstellung von Einbrennbeschichtungen mit guter Haftung und Steinschlagfestigkeit.

3) Ausführungsform nach Anspruch 1 oder 2, dadurch gekennzeichnet, daß andere Diole mit mehr als 3 C-Atomen zwischen den beiden OH-Gruppen nur in einer solchen Menge vorhanden sind, daß höchstens 10, vorzugsweise höchstens 5 Äquivalentprozent der OH-Gruppen aus diesen Alkoholen stammen.

4) Ausführungsform nach einem oder mehreren der Ansprüche 1 bis 3, dadurch gekennzeichnet, daß die Summe der Anteile an Butandiol-1,4 und Terephthalsäure 10 bis 40, insbesondere 12 bis 25 Gew.-% beträgt.

5) Ausführungsform nach einem oder mehreren der Ansprüche 1 bis 4, dadurch gekennzeichnet, daß noch andere Kunstharze, vorzugsweise Celluloseacetobutyrat in einer Menge bis zu 100 Gew.-% oder Epoxydharze in einer Menge bis zu
35 Gew.-%, jeweils bezogen auf das lösungsmittelfreie
Polyesterharz, zugegen sind.

6) Ausführungsform nach einem oder mehreren der Ansprüche
1 bis 5, dadurch gekennzeichnet, daß die Säurekomponente
höchstens 5, vorzugsweise höchstens 2 Gew.-% dimerisierte
Fettsäuren und/oder höchstens 4, vorzugsweise höchstens
2 % monomere Fettsäuren enthält.

7) Ausführungsform nach einem oder mehreren der Ansprüche 1 bis 6, dadurch gekennzeichnet, daß die Einheiten
der dreiwertigen Alkohole in einer Menge bis zu 45, insbesondere bis zu 40 Äquivalentprozent, berechnet auf die
Gesamtmenge der Hydroxylgruppen, enthalten sind, daß der
mindestens dreiwertige Alkohol vorzugsweise Trimethylolpropan ist und daß der Anteil der vierwertigen Alkoholkomponenten vorzugsweise nicht mehr als 5 Äquivalentprozent beträgt.

8) Ausführungsform nach einem oder mehreren der Ansprüche
1 bis 7, dadurch gekennzeichnet, daß der Anteil der dreiwertigen Alkoholkomponente mindestens 30, insbesondere
mindestens 35 Äquivalentprozent, berechnet auf die Gesamtmenge der Hydroxylgruppen, und der Anteil der aromatischen
Carbonsäuren 55 bis 80, insbesondere 60 bis 70 Mol.-%
beträgt.

9) Ausführungsform nach einem oder mehreren der Ansprüche
1 bis 8, dadurch gekennzeichnet, daß das Gewichtsverhältnis zwischen den Polyesterharzen und Aminharzen 9:1
bis 1:1, vorzugsweise 9:1 bis 2:1 beträgt.

10) Ausführungsform nach einem oder mehreren der Ansprüche
1 bis 9, dadurch gekennzeichnet, daß die Aminharze wenigstens partielle Verätherungsprodukte solcher Melaminharze
sind, die 3 bis 6 Hydroxymethylgruppen je Melaminmolekül enthalten, wobei die Verätherungskomponente einwertige Alkohole mit 1 bis 4 C-Atomen sind.